# EUROPÄISCHE PATENTSCHRIFT

(11) **EP 3 164 756 B1**
(45) Veröffentlichungstag und Bekanntmachung des Hinweises auf die Patenterteilung: **22.03.2023**
(21) Anmeldenummer: 15735877.1
(22) Anmeldetag: 26.06.2015
(51) Int. Cl.: G02B 27/01, G06F 3/01, G06F 3/0346

(54) **LOKALISIERUNG EINES HMD IM FAHRZEUG**
LOCATING AN HMD IN A VEHICLE
LOCALISATION D'UN VISIOCASQUE DANS UN VÉHICULE

(30) Priorität: 04.07.2014 DE 102014213021
(43) Veröffentlichungstag der Anmeldung: 10.05.2017
(73) Patentinhaber: Bayerische Motoren Werke Aktiengesellschaft, 80809 München (DE)
(72) Erfinder: HABERL, Wolfgang, 81547 München (DE); KAUFMANN, Matthias Roland, 85716 Unterschleißheim (DE); KNEBEL, Karsten, 80636 München (DE); SPIESSL, Wolfgang, 85276 Pfaffenhofen (DE)
(86) Internationale Anmeldenummer: PCT/EP2015/064501
(87) Internationale Veröffentlichungsnummer: WO 2016/001079

(56) Entgegenhaltungen:
- EP-A2- 2 254 023
- WO-A1-00/52563
- US-A1- 2002 194 914
- US-A1- 2007 273 610
- US-A1- 2013 050 258

## Beschreibung

Die Erfindung betrifft eine Datenbrille (HMD) zum Bestimmen der Pose der Datenbrille in einem Fahrzeug.

Heutzutage sind Datenbrillen (Head-mounted Displays, HMDs) bekannt, mit deren Hilfe dem Träger der Datenbrille Informationen angezeigt werden können. Die Datenbrille wird dabei wie eine gewöhnliche Brille, die als Sehhilfe verwendet wird, auf dem Kopf getragen. Gegenüber einer gewöhnlichen Brille umfasst die Datenbrille jedoch eine Anzeige, die beim Tragen der Datenbrille nahe dem oder den Augen des Benutzers angeordnet ist. Die Anzeige kann dabei zwei Teilanzeigen umfassen, eine für jedes Auge. Auf der Anzeige können dem Benutzer Informationen in Form von Text, graphischen Darstellungen oder Mischungen davon angezeigt werden. Die Anzeige kann insbesondere teildurchlässig sein, also so ausgestaltet sein, dass der Träger auch die Umgebung hinter der Anzeige erkennen kann. Besonders bevorzugt werden dem Träger die Informationen kontaktanalog angezeigt, was manchmal auch als augmented reality bezeichnet wird. Dabei wird dem Träger der Datenbrille die Information an einem Ort angezeigt, der an dem Ort eines Objektes in der Umgebung orientiert ist, also beispielsweise an das Objekt angrenzend oder dieses überlagernd. Zur Realisierung der Kontaktanalogie, muss typischerweise die Position des Objektes in der Umgebung und die Pose der Datenbrille in Relation zum Objekt bekannt sein, also die Position der Datenbrille und die Ausrichtung der Datenbrille.

Es sind Datenbrillen bekannt geworden, die ebenfalls jeweils eine Kamera umfassen, die Aufnahmen in Blickrichtung des Trägers der Datenbrille macht, siehe beispielsweise US2007/273610, EP2254023, WO00/52563, WO 2013/012914. Dokument US 2002/0194914 beschreibt das Bewegungstracking von Datenbrillen mithilfe von Beschleunigungssensorik. In US2007/273610 wird die Pose einer Datenbrille bezüglich einer Markierung, die fest auf einem unbeweglichen Objekt angebracht ist, bestimmt.

Datenbrillen können auch in Fahrzeugen genutzt werden, um kontaktanaloge Informationen anzuzeigen. Diese Informationen können andere Verkehrsteilnehmer oder Objekte im Fahrzeug betreffen. Um kontaktanaloge Informationen anzeigen zu können muss in den meisten Fällen auch hier die Pose der Datenbrille bekannt sein.

Es ist eine Aufgabe der vorliegenden Erfindung, ein Verfahren bereitzustellen, mit dem die Pose der Datenbrille bestimmt werden kann und darauf aufbauend auf kontaktanaloge Weise Informationen angezeigt werden können.

Ein Aspekt der Erfindung betrifft eine Datenbrille, die zum Bestimmen der Pose der Datenbrille relativ zu einem Fahrzeug eingerichtet ist, wobei die Datenbrille eine Anzeige und eine Kamera sowie elektronische Rechenmittel umfasst; Wobei die Vorrichtung zu Folgendem eingerichtet ist: Erstellen von Aufnahmen der Umgebung der Datenbrille mithilfe der Kamera; Empfangen von Angaben zur Position und/oder Ausrichtung eines (relativ zum Fahrzeuginnenraum) beweglichen Gegenstands des Innenraums des Fahrzeugs (beispielsweise drahtlos mittels des Wi-Fi oder Bluetooth Standards); Erkennen der Abbildung des Gegenstandes in den Aufnahmen der Kamera; Bestimmen der Pose der Datenbrille unter Berücksichtigung der Abbildung des Gegenstandes in den Aufnahmen relativ zum Fahrzeug; wobei die Pose der Datenbrille die 3D Position der Datenbrille und die 3D Ausrichtung der Datenbrille relativ zum Fahrzeug angibt. Angaben zur Position des Gegenstandes können Angaben zur Position von Merkmalen des Gegenstandes sein, die zur Erkennung und Bestimmung der Position und Pose der Datenbrille geeignet sind. Ein Gegenstand kann beispielsweise ein Lenkrad, eine Klappe oder ein Hebel sein.

Hierin wird also vorgeschlagen, die Pose der Datenbrille anhand von beweglichen Gegenständen des Fahrzeugs, insbesondere eines Lenkrads, zu bestimmen, wobei die Position und/oder Ausrichtung des Gegenstandes bekannt ist. Da sich die Drehung (Lenkwinkel) und Position (Höhen- und Längsverstellung) eines Lenkrades im Betrieb des Fahrzeugs ändern, kann das Lenkrad gemäß dem Stand der Technik nicht dazu dienen, die Pose der Datenbrille mittels Kameraaufnahmen des Lenkrades zu bestimmen. Die Erfindung schlägt nun vor, dass der Lenkwinkel und die Position des Lenkrades vom Fahrzeug an die Datenbrille übertragen werden (beispielsweise drahtlos mithilfe der Wi-Fi oder Bluetooth Standards). Mithilfe dieses Wissens kann aus den Aufnahmen des Lenkrades auf die Pose der Datenbrille geschlossen werden. Gegebenenfalls können zur Posenbestimmung gleichzeitig auch die Aufnahmen anderer stationärer Gegenstände im Innenraum herangezogen werden.

Die Datenbrille kann mithilfe der empfangenen Angaben ein 3D Modell des beweglichen Gegenstandes erstellen und dieses zur Posenbestimmung nutzen. Das 3D Modell des Gegenstandes kann von einem generischen 3D Modell abgeleitet werden anhand der Angaben zur Position und Ausrichtung des Gegenstandes. Darüber hinaus kann der Datenbrille ein 3D Modell auch von anderen Teilen des Innenraums des Fahrzeugs vorliegen.

In einer Implementierung ist die Vorrichtung ferner zu Folgendem eingerichtet: Empfangen von Angaben zur Änderungsgeschwindigkeit der Position und/oder Ausrichtung des Gegenstandes des Innenraums des Fahrzeugs. Mithilfe dieser Angaben kann die Datenbrille die wahrscheinliche zukünftige Position und Ausrichtung des Gegenstandes bestimmen. Dies ist vor allem dann hilfreich, wenn zwischen dem Messzeitpunkt der Position und Ausrichtung des Gegenstandes und der Bestimmung der Pose der Datenbrille ein Zeitraum liegt, von dem angenommen werden kann, dass sich die Position und Ausrichtung des Gegenstandes ausreichend stark verändert, um die Posenbestimmung wesentlich zu beeinflussen.

Die Erkennung der Abbildung des Gegenstandes wird typischerweise abhängig von den empfangenen Angaben zur Position und/oder Ausrichtung des Gegenstandes ausgeführt. Die Erkennung kann auf diese Art robuster und schneller durchgeführt werden, da Vorwissen bezüglich der Ausrichtung und Position des Gegenstandes besteht. Die Erkennung kann mithilfe einer Mustererkennung oder eines Klassifikators durchgeführt werden. Dabei wird die Mustererkennung oder der Klassifikator an die Angaben zur Position und/oder Ausrichtung des Gegenstandes angepasst.

Die Position des Lenkrades ergibt sich typischerweise aus der Höhen- und Längsverstellung des Lenkrades durch den Fahrer. Die Ausrichtung des Lenkrades bzw. dessen Rotation ergibt sich aus dem Lenkwinkel, also der Verdrehung des Lenkrades um die Lenkachse.

In einer Implementierung wird das Bestimmen der Pose der Datenbrille auch unter Berücksichtigung nicht-beweglicher Gegenstände des Fahrzeuginnenraums vorgenommen. Die Posenbestimmung geschieht also auf einem Mix von statischen und dynamischen Merkmalen, die jeweils von im Innenraum beweglichen und statischen Gegenständen erkannt werden. Ein statischer Gegenstand kann beispielsweise ein Kombi-Instrument, eine Anzeige, eine Dekorleiste, ein Fensterrahmen, etc. sein. Diese Gegenstände können in einem 3D CAD Modell verzeichnet sein und zur Posenbestimmung dienen.

Weiterhin kann das 3D CAD Modell dazu dienen, zu erkennen, welche Bereiche von statischen Gegenständen von beweglichen Gegenständen verdeckt sein können. Auf diese Weise können Merkmale statischer Gegenstände selbst dann zur Posenbestimmung verwendet werden, wenn die statischen Gegenstände zumindest teilweise von beweglichen Gegenständen verdeckt sind. Dabei kann die aktuelle (empfangene) Position und Ausrichtung des jeweiligen beweglichen Gegenstandes berücksichtigt werden.

In einer vorteilhaften Implementierung ist die Vorrichtung ferner zu folgendem eingerichtet: Überprüfen, ob in den Aufnahmen der Kamera eine zur Bestimmung der Pose ausreichende Anzahl an Gegenständen und/oder Merkmalen von Gegenständen erkennbar ist; Falls keine ausreichende Anzahl erkennbar ist: Ausführen der Schritte des Empfangens, Erkennens und Bestimmens. Die oben dargestellten Verfahren können als Ausweichverfahren verwendet werden, wenn mithilfe der Kamera nicht ausreichend viele statische (also als ortsfest erkannte) Merkmale des Innenraums des Fahrzeugs erkannt werden. Nur, wenn die Pose der Datenbrille mithilfe der statischen Merkmale nicht bestimmt werden kann, werden dynamische Merkmale (also die Erkennung von Merkmalen beweglicher Gegenstände) mit berücksichtigt.

Ein anderer Aspekt der Erfindung betrifft ein Verfahren zum Bestimmen der Pose einer Datenbrille in einem Fahrzeug, wobei die Datenbrille eine Anzeige, eine Kamera und elektronische Rechenmittel umfasst; wobei das Verfahren umfasst: Erstellen von Aufnahmen der Umgebung der Datenbrille mithilfe der Kamera; Empfangen von Angaben zur Position und/oder Ausrichtung eines Gegenstands des Innenraums des Fahrzeugs; Erkennen der Abbildung des Gegenstandes in den Aufnahmen der Kamera; Bestimmen der Pose der Datenbrille unter Berücksichtigung der Abbildung des Gegenstandes in den Aufnahmen; wobei die Pose der Datenbrille die Position der Datenbrille und die Ausrichtung der Datenbrille angibt. Das Verfahren wird typischerweise von der Datenbrille ausgeführt.

### KURZE BESCHREIBUNG DER ZEICHNUNG

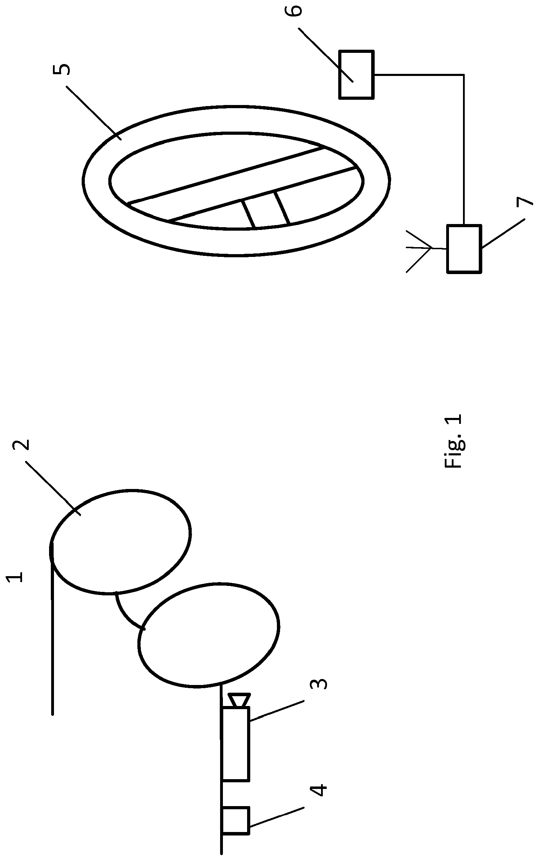

### Fig. 1 zeigt schematisch eine Vorrichtung gemäß einem Ausführungsbeispiel

### DETAILLIERTE BESCHREIBUNG DES AUSFÜHRUNGSBEISPIELS

Fig. 1 zeigt schematisch eine Vorrichtung gemäß einem Ausführungsbeispiel. Die Datenbrille 1 umfasst zwei Teilanzeigen 2, je eine für das linke und das rechte Auge. Des Weiteren umfasst die Datenbrille 1 eine Kamera 3 und eine Recheneinheit 4. Nicht in Fig. 1 dargestellt, aber von der Datenbrille 1 umfasst ist ein Akkumulator und ein Wi-Fi Modul zur drahtlosen Funkübertragung. Die Datenbrille wird wie eine typische Sehhilfe auf dem Kopf getragen, wobei die Datenbrille auf der Nase und den Ohren aufliegt. Die Kamera 3 ist in Blickrichtung des Trägers (nicht gezeigt) der Datenbrille 1 ausgerichtet und nimmt im Wesentlichen das Blickfeld des Trägers der Datenbrille 1 auf. Die Kamera 3 macht fortlaufend Aufnahmen, also beispielsweise alle 16 ms, im sichtbaren Bereich des Lichts.

Im vorliegenden Beispiel ist der Träger der Datenbrille der Fahrer eines Fahrzeugs. Im Innenraum des Fahrzeugs befindet sich ferner das Lenkrad 5 des Fahrzeugs. Über einen Sensor 6 kann das Fahrzeug den Lenkwinkel des Lenkrades bestimmen. Ferner bestimmt der Sensor 6 die Höhen- und Längseinstellung des Lenkrades. Diese Daten gibt der Sensor an ein Steuermodul 7 weiter. Das Steuermodul 7 verarbeitet die Sensordaten und sendet den Lenkwinkel (also die Ausrichtung des Lenkrades) sowie die Position fortlaufend über eine drahtlose Funkübertragung (beispielsweise Wi-Fi) an die Datenbrille 1. Es kann vorgesehen sein, die Position des Lenkrades nur zu größeren Zeitintervallen zu übertragen, also nicht zu jeder Übertragung des Lenkwinkels.

Einmalig, beispielsweise bei der ersten Kopplung des Fahrzeugs und der Datenbrille 1 über die drahtlose Funkverbindung wurde der Datenbrille 1 ein 3D CAD Modell des Fahrzeuginnenraums sowie insbesondere des Cockpits mit dem Lenkrad übermittelt. In diesen Daten wurde auch die Art beschrieben, wie das Lenkrad seine Position und Drehung verändern kann.

Dieses 3D Modell des Lenkrades sowie die Angaben zu dessen Position und Verdrehung verwendet die Datenbrille nun, um in den Kameraaufnahmen das Lenkrad zu erkennen. Anhand der Kenntnis der aktuellen Ausrichtung und Position des Lenkrades im Innenraum des Fahrzeuges kann die Datenbrille ihre Pose relativ zum Fahrzeug bestimmen.

## Patentansprüche

1. Datenbrille, die zum Bestimmen der Pose der Datenbrille (1) relativ zu einem Fahrzeug eingerichtet ist,
wobei die Datenbrille (1) eine Anzeige (2), Mittel zur drahtlosen Funkübertragung und eine Kamera (3) sowie elektronische Rechenmittel umfasst;
Wobei die Datenbrille (1) zu Folgendem eingerichtet ist:
fortlaufend Erstellen von Aufnahmen der Umgebung der Datenbrille (1) mithilfe der Kamera (3);
Empfangen von Angaben zur Position und/oder Ausrichtung eines beweglichen Gegenstands (5) des Innenraums des Fahrzeugs mithilfe der Mittel zur drahtlosen Funkübertragung, fortlaufend oder zu größeren Zeitintervallen;
Erkennen der Abbildung des Gegenstandes (5) in den Aufnahmen der Kamera (3) mithilfe der elektronischen Rechenmittel;
Bestimmen der Pose der Datenbrille (1) unter Berücksichtigung der Abbildung des Gegenstandes (5) in den Aufnahmen relativ zum Fahrzeug; wobei die Pose der Datenbrille (1) die Position der Datenbrille (1) und die Ausrichtung der Datenbrille (1) angibt.

2. Vorrichtung nach Anspruch 1, wobei die Datenbrille (1) ferner zu Folgendem eingerichtet ist:
Empfangen von Angaben zur Änderungsgeschwindigkeit der Position und/oder Ausrichtung des Gegenstandes (5) des Innenraums des Fahrzeugs.

3. Datenbrille einem der vorhergehenden Ansprüche, wobei das Erkennen der Abbildung des Gegenstandes (5) abhängig von den empfangenen Angaben zur Position und/oder Ausrichtung des Gegenstandes (5) ausgeführt wird.

4. Datenbrille nach Anspruch 3, wobei das Erkennen der Abbildung mithilfe einer Mustererkennung durchgeführt wird, wobei die Mustererkennung an die empfangenen Angaben zur Position und/oder Ausrichtung des Gegenstandes (5) angepasst wird.

5. Datenbrille nach Anspruch 3, wobei das Erkennen mithilfe eines Klassifikators durchgeführt wird, wobei dieser Klassifikator an die empfangenen Angaben zur Position und/oder Ausrichtung des Gegenstandes (5) angepasst wird.

6. Datenbrille nach einem der vorhergehenden Ansprüche, wobei der Gegenstand (5) das Lenkrad (5) des Fahrzeugs ist und wobei die Position die Position des Lenkrads (5) ist und wobei die Orientierung des Lenkrads (5) der Lenkwinkel, also die Verdrehung des Lenkrades (5) um die Lenkachse, ist.

7. Datenbrille nach einem der vorhergehenden Ansprüche, wobei das Bestimmen der Pose der Datenbrille (1) auch unter Berücksichtigung nicht-beweglicher Gegenstände des Fahrzeuginnenraums vorgenommen wird.

8. Datenbrille nach einem der vorhergehenden Ansprüche, wobei die Datenbrille ferner zu folgendem eingerichtet ist:
Überprüfen, ob in den Aufnahmen der Kamera (3) eine zur Bestimmung der Pose ausreichende Anzahl an Gegenständen und/oder Merkmalen von Gegenständen (5) erkennbar ist;
Falls keine ausreichende Anzahl erkennbar ist: Ausführen der Schritte des Empfangens, Erkennens und Bestimmens.

9. Verfahren zum Bestimmen der Pose einer Datenbrille (1) in einem Fahrzeug, wobei die Datenbrille eine Anzeige (3), eine Kamera (5), Mittel zur drahtlosen Funkübertragung und elektronische Rechenmittel umfasst; wobei das Verfahren umfasst:
fortlaufend Erstellen von Aufnahmen der Umgebung der Datenbrille (1) mithilfe der Kamera (3);
Empfangen von Angaben zur Position und/oder Ausrichtung eines Gegenstands (5) des Innenraums des Fahrzeugs mithilfe der Mittel zur drahtlosen Funkübertragung, fortlaufend oder zu größeren Zeitintervallen;
Erkennen der Abbildung des Gegenstandes (5) in den Aufnahmen der Kamera (3) mithilfe der elektronischen Rechenmittel;
Bestimmen der Pose der Datenbrille (1) unter Berücksichtigung der Abbildung des Gegenstandes (5) in den Aufnahmen; wobei die Pose der Datenbrille (1) die Position der Datenbrille (1) und die Ausrichtung der Datenbrille (1) angibt.

## Claims

1. Smart glasses configured for determining the posture of the smart glasses (1) relative to a vehicle,
wherein the smart glasses (1) comprise a display (2), means for wireless radio transmission and a camera (3) and also electronic computation means;
the smart glasses (1) being configured for the following:
continually making recordings of the surroundings of the smart glasses (1) by using the camera (3);
receiving statements relating to the position and/or alignment of a moving object (5) in the interior of the vehicle by using the means for wireless radio transmission, continually or at longer intervals of time;
detecting the image of the object (5) in the recordings by the camera (3) by using the electronic computation means;
determining the posture of the smart glasses (1) by taking into consideration the image of the object (5) in the recordings relative to the vehicle; the posture of the smart glasses (1) indicating the position of the smart glasses (1) and the alignment of the smart glasses (1).

2. Apparatus according to Claim 1, wherein the smart glasses (1) are furthermore configured for the following:
receiving statements relating to the rate of change of the position and/or alignment of the object (5) in the interior of the vehicle.

3. Smart glasses according to either of the preceding claims, wherein the detecting of the image of the object (5) is carried out on the basis of the received statements relating to the position and/or alignment of the object (5).

4. Smart glasses according to Claim 3, wherein the detecting of the image is carried out using pattern recognition, the pattern recognition being adapted for the received statements relating to the position and/or alignment of the object (5).

5. Smart glasses according to Claim 3, wherein the detecting is carried out using a classifier, this classifier being adapted for the received statements relating to the position and/or alignment of the object (5) .

6. Smart glasses according to one of the preceding claims, wherein the object (5) is the steering wheel (5) of the vehicle and wherein the position is the position of the steering wheel (5) and wherein the orientation of the steering wheel (5) is the steering angle, that is to say the rotation of the steering wheel (5) about the steering axis.

7. Smart glasses according to one of the preceding claims, wherein the determining of the posture of the smart glasses (1) is also carried out by taking into consideration non-moving objects in the vehicle interior.

8. Smart glasses according to one of the preceding claims, wherein the smart glasses are furthermore configured for the following:
checking whether a number of objects and/or features of objects (5) which is sufficient for determining the posture is detectable in the recordings by the camera (3) ;
if a sufficient number is not detectable: carrying out the receiving, detecting and determining steps.

9. Method for determining the posture of smart glasses (1) in a vehicle, wherein the smart glasses comprise a display (3), a camera (5), means for wireless radio transmission and electronic computation means; the method comprising:
continually making recordings of the surroundings of the smart glasses (1) by using the camera (3);
receiving statements relating to the position and/or alignment of an object (5) in the interior of the vehicle by using the means for wireless radio transmission, continually or at longer intervals of time;
detecting the image of the object (5) in the recordings by the camera (3) by using the electronic computation means;
determining the posture of the smart glasses (1) by taking into consideration the image of the object (5) in the recordings; the posture of the smart glasses (1) indicating the position of the smart glasses (1) and the alignment of the smart glasses (1).

## Revendications

1. Lunettes connectées, lesquelles sont conçues pour déterminer la posture des lunettes connectées (1) par rapport à un véhicule,
les lunettes connectées (1) comportant un afficheur (2), des moyens de transmission radioélectrique sans fil et une caméra (3) ainsi qu'un moyen de calcul électronique ;
les lunettes connectées (1) étant conçues pour ce qui suit :
création en continu d'enregistrements de l'environnement des lunettes connectées (1) à l'aide de la caméra (3) ;
réception d'indications à propos de la position et/ou de l'orientation d'un objet mobile (5) de l'espace intérieur du véhicule à l'aide des moyens de transmission radioélectrique sans fil, continuellement ou à de grands intervalles de temps ;
reconnaissance de la représentation de l'objet (5) dans les enregistrements de la caméra (3) à l'aide du moyen de calcul électronique ;
détermination de la posture des lunettes connectées (1) en tenant compte de la représentation de l'objet (5) dans les enregistrements par rapport au véhicule ;
la posture des lunettes connectées (1) indiquant la position des lunettes connectées (1) et l'orientation des lunettes connectées (1).

2. Dispositif selon la revendication 1, les lunettes connectées (1) étant en outre conçues pour ce qui suit : réception d'indications à propos de la vitesse de changement de la position et/ou de l'orientation de l'objet (5) de l'espace intérieur du véhicule.

3. Lunettes connectées selon l'une des revendications précédentes, la reconnaissance de la représentation de l'objet (5) étant effectuée en fonction des indications reçues à propos de la position et/ou de l'orientation de l'objet (5).

4. Lunettes connectées selon la revendication 3, la reconnaissance de la représentation étant effectuée à l'aide d'une reconnaissance de modèle, la reconnaissance de modèle étant adaptée aux indications reçues à propos de la position et/ou de l'orientation de l'objet (5).

5. Lunettes connectées selon la revendication 3, la reconnaissance étant effectuée à l'aide d'un classificateur, ce classificateur étant adapté aux indications reçues à propos de la position et/ou de l'orientation de l'objet (5).

6. Lunettes connectées selon l'une des revendications précédentes, l'objet (5) étant le volant de direction (5) du véhicule et la position étant la position du volant de direction (5) et l'orientation du volant de direction (5) étant l'angle de braquage, c'est-à-dire la rotation du volant de direction (5) autour de l'axe de direction.

7. Lunettes connectées selon l'une des revendications précédentes, la détermination de la posture des lunettes connectées (1) étant également réalisée en tenant compte d'objets non mobiles de l'espace intérieur du véhicule.

8. Lunettes connectées selon l'une des revendications précédentes, les lunettes connectées étant en outre conçues pour ce qui suit :
vérification si un nombre suffisant d'objets et/ou de caractéristiques d'objets (5) sont reconnaissables dans les enregistrements de la caméra (3) pour la détermination de la posture ;
dans le cas où aucun nombre suffisant n'est reconnaissable, exécution des étapes de réception, de reconnaissance et de détermination.

9. Procédé de détermination de la posture de lunettes connectées (1) dans un véhicule, les lunettes connectées comportant un afficheur (3), une caméra (5), des moyens de transmission radioélectrique sans fil et un moyen de calcul électronique ; le procédé comprenant :
création en continu d'enregistrements de l'environnement des lunettes connectées (1) à l'aide de la caméra (3) ;
réception d'indications à propos de la position et/ou de l'orientation d'un objet mobile (5) de l'espace intérieur du véhicule à l'aide des moyens de transmission radioélectrique sans fil, continuellement ou à de grands intervalles de temps ;
reconnaissance de la représentation de l'objet (5) dans les enregistrements de la caméra (3) à l'aide du moyen de calcul électronique ;
détermination de la posture des lunettes connectées (1) en tenant compte de la représentation de l'objet (5) dans les enregistrements ; la posture des lunettes connectées (1) indiquant la position des lunettes connectées (1) et l'orientation des lunettes connectées (1).
